# EUROPÄISCHE PATENTSCHRIFT

(11) **EP 1 237 707 B1**
(45) Veröffentlichungstag und Bekanntmachung des Hinweises auf die Patenterteilung: **16.07.2003**
(21) Anmeldenummer: 00979314.2
(22) Anmeldetag: 11.12.2000
(51) Int. Cl.: B29C 51/04, B29C 51/14, B29C 51/38, B29C 67/00

(54) **VERFAHREN UND VORRICHTUNG ZUR HERSTELLUNG VON VERPACKUNGEN OHNE DIE FOLIE ZU HEIZEN**
METHOD AND DEVICE FOR PRODUCING PACKINGS WITHOUT HEATING THE FILM
PROCEDE ET DISPOSITIF DE FABRICATION D'EMBALLAGES SANS CHAUFFAGE DU FILM

(30) Priorität: 17.12.1999 CH 232199
(43) Veröffentlichungstag der Anmeldung: 11.09.2002
(73) Patentinhaber: Rohrer AG, 4313 Möhlin (CH)
(72) Erfinder: HILPERT, Hanspeter, 79618 Rheinfelden (DE); RAGGENBASS, Alfred, CH-8157 Dielsdorf (CH); ZUMSTEG, Heinz, CH-4314 Zeiningen (CH)
(74) Vertreter: Bollhalder, Renato
(86) Internationale Anmeldenummer: CH0000658
(87) Internationale Veröffentlichungsnummer: WO01043947

(56) Entgegenhaltungen:
- EP-A- 0 779 143
- EP-A- 1 023 985
- US-A- 3 600 753
- US-A- 4 266 416
- US-A- 4 563 325

## Beschreibung

Die vorliegende Erfindung betrifft ein Verfahren zur Herstellung von Verpackungen aus Kunststoff-Metall-Verbundfolien, aus reinen Metall- oder Kunststofffolien durch Streck- bzw. Tiefziehen mittels Formstempel kombiniert mit Gasdruck oder durch Gasdruck allein sowie eine Vorrichtung zur Durchführung dieses Verfahrens. Insbesondere betrifft sie ein solches Verfahren zur Herstellung von Blisterverpackungen.

Die Herstellung von Folienverpackungen ist in vielerlei Hinsicht von Bedeutung. Verpackungen aus Folien weisen ein geringes Gewicht auf und sind nicht zerbrechlich. Kunststoffverpackungen in Form von sogenannten Blistern lassen sich besonders leicht herstellen, da sie lediglich aus einer Kunststofffolie, in die Vertiefungen eingeformt wurden (diese werden in der Technik als "Höfe" bezeichnet, die Verpackung, bestehend aus einem oder mehreren Höfen wird als "Blister" bezeichnet) und einer darauf angeklebten oder angeschweissten Deckfolie bestehen. Das zu verpackende Gut wird vor dem Verschweissen der beiden Teile in die Höfe eingebracht. Anstelle reiner Kunststofffolie werden auch mehrschichtige Folien verwendet, insbesondere mehrschichtige Folien, die eine metallische Schicht aufweisen zwecks Abschirmung von Licht oder Feuchtigkeit. Die Metallschicht kann auch nur eine metallische Beschichtung sein. Die Technik der beschriebenen Art von Verpackungen ist an sich bekannt.

Aus der US-A-3 600 753 ist ein Verfahren zur Umformung einer Kunststofffolie zur Herstellung einer Verpackung bekannt, bei dem die Folie über einer Formhohlräume aufweisenden Matrize positioniert wird, Teile der Folie mittels Stempeln in die Ponnhohlräume hineingedrückt werden, wodurch in der Folie Höfe erzeugt werden, und die Höfe von ihrer konkaven Seite her mit Druckgas beaufschlagt werden. Bei der Folie handelt es sich um eine vorgängig erwärmte Kunststofffolie, wobei durch die Erwärmung die Deformierbarkeit grösser wird, sodass bei gleichbleibender Blisterfläche tiefere Höfe hergestellt werden können. Ausserdem nehmen die benötigten Umformkräfte mit zunehmender Folientemperatur ab.

Die Umformung von erwärmten Kunststoff-Metall-Verbundfolien oder erwärmten reinen Metallfolien mittels Druckgas wird nicht praktiziert, da eine Erwärmung der Folie keine grössere Deformierbarkeit bewirkt (der erreichbare Umformgrad der Folie wird durch die metallische Schicht begrenzt, die sich im Bereich der erwähnten Temperaturen nicht wesentlich anders verhält als bei Raumtemperatur).

Die US-A-3 600 753 offenbart ausserdem eine Vorrichtung, welche umfasst: ein Werkzeug mit einer Werkzeugsplatte und einer Matrize, die mehrere Formhohlräume aufweist; eine Stempelhalteplatte mit mehreren Stempeln, dergestalt, dass Matrize und Stempelhalteplatte gegeneinander verschiebbar sind und die Stempel dabei in die Formhohlräume eintauchen; Mittel zur Zufuhr von Druckgas, dergestalt, dass bei in die Formhohlräume eingetauchten Stempeln die Formhohlräume mit Druckgas beaufschlagbar sind; Mittel zur Arretierung von Matrize und Stempelhalteplatte in einer bestimmten relativen Position zueinander; sowie eine von Kühlmittel durchflossene Platte zwischen Stempelhalteplatte und Matrize.

Es ergibt sich die Aufgabe, ein Verfahren zu finden, das insbesondere im Fall von Kunststoff-Metall-Verbundfolien sowie im Fall von reinen Metallfolien die Herstellung von Höfen mit grossem Verhältnis Hoftiefe zu Blisterfläche erlaubt. Das Verfahren soll ausserdem auch bei Kunststofffolien eingesetzt werden können.

Diese Aufgabe wird durch das Verfahren von Anspruch 1 gelöst.

Es wurde nämlich gefunden, dass sich durch das neue Verfahren die Umformeigenschaften der metallischen Schicht gezielt nutzen lassen, sodass Höfe mit grossem Verhältnis Hoftiefe zu Blisterfläche hergestellt werden können. Dabei wird beim Vorformen (Schritt b) des erfindungsgemässen Verfahrens) die Folie in den Seitenwänden der entstehenden Höfe stärker beansprucht als die Folie in den Bodenwänden der entstehenden Höfe. Beim Ausformen (Schritt c) des erfindungsgemässen Verfahrens) wird die Folie in den Bodenwänden stärker beansprucht als die Folie in den Seitenwänden der Höfe. Ausserdem ergibt sich durch das neue Verfahren, insbesondere beim Ausformen mittels Druckgas, eine andere Spannungsverteilung in der Folie als beim Streck- bzw. Tiefziehen mittels Formstempel. Dies manifestiert sich besonders bei Hofgeometrien mit planem Hofboden in einer grösseren Stabilität. Voraussetzung zum Erreichen dieser grösseren Stabilität ist allerdings, dass das Ausformen bei Temperaturen unterhalb der Glastemperatur der Kunststoffschichten bzw. im Fall reiner Metallfolien unterhalb der Rekristallisationstemperatur stattfindet.

### Beschreibung der Figuren

Es zeigen:
- Figur 1 -: ein Teilschnitt der Vorrichtung, wie sie vorzugsweise für das erfindungsgemässe Verfahren eingesetzt werden kann;
- Figur 2 -: ein Teilschnitt der Vorrichtung, wie sie vorzugsweise für das erfindungsgemässe Verfahren eingesetzt werden kann, bei Verfahrensschritt b) des erfindungsgemässen Verfahrens;
- Figur 3 -: ein Teilschnitt der Vorrichtung, wie sie vorzugsweise für das erfindungsgemässe Verfahren eingesetzt werden kann, mit einem aktivierten Verriegelungsmechanismus zwischen Ober- und Unterwerkzeug;
- Figur 4 -: ein Teilschnitt der Vorrichtung, wie sie vorzugsweise für das erfindungsgemässe Verfahren eingesetzt werden kann, mit dem eingerasteteten Verriegelungsmechanismus zwischen Ober- und Unterwerkzeug, während Schritt c) des erfindungsgemässen Verfahrens.

Bei dem erfindungsgemässen Verfahren werden die Höfe zunächst beispielsweise mittels eines Formstempels mechanisch vorgeformt und anschliessend mittels Gasdruck fertig ausgeformt oder sie werden ohne mechanische Vorformung direkt mittels Gasdruck ausgeformt. Dabei weist die Matrize einen Formhohlraum auf, der abgesehen von der elastischen Rückformung der Folie weitgehend der Geometrie des Hofes entspricht, der geformt werden soll. Bei der Vorformung wird die Folie derart in den Formhohlraum der Matrize gepresst, dass sie nur am Formstempel und an der Matrizenrundung des Formhohlraums anliegt. Beim Ausformen mittels Gasdruck legt sich die Folie dann an den Formhohlraum an und nimmt somit dessen Form an. Diese Art der Umformung (sowohl Vorformung wie Ausformung) wird in der Technik als Streckziehen, Tiefziehen oder eine Mischung der beiden Verfahren bezeichnet.

Als "Folie, die eine Metallschicht umfasst" gelten im Rahmen der vorliegenden Anmeldung reine Metallfolien oder Kunststoff/Metall-Verbundfolien, die aus zwei oder mehr Lagen hergestellt sind und wovon mindestens eine Lage eine Metallschicht ist. Bei mindestens drei Schichten ist die Metallschicht in der Regel als eine der inneren Lagen vorhanden, so dass eine "Sandwich"-Struktur vorhanden ist.

Falls es sich bei der Folie um eine reine Metallfolie handelt, kann jedes genügend duktile Metall verwendet werden. Beispiele für solche Metalle sind Aluminum, Kupfer, Silber, Gold und Zinn.

Das Metall für die Metallschicht einer Verbundfolie kann irgend ein Metall sein, das als Folie (also durch Verkleben oder Verschweissen) oder als aufgedampfte Schicht auf eine Kunststoffschicht aufgetragen werden kann. Bevorzugte Beispiele für solche Metalle sind die oben erwähnten Metalle.

Als Kunststoffe für die Kunststofffolie oder die Kunststofflage(n) einer metallschichthaltigen Verbundfolie kommen alle Kunststoffe in Frage, die für Blisterfolien üblicherweise eingesetzt werden. Beispiele für solche Kunststoffe sind thermoplastische Kunststoffe wie Polystyrol, Polyethylen, Polypropylen, Polyvinylchlorid, Polyacrylnitril, Polycarbonat und Celluloseacetat und Copolymere wie ABS (Acrylnitril-Butadien-Styrol), ASA (Acrylnitril-Styrol-Acrylester), PET (Polyethylen-Terephthalat) und PES (Polyethersulfon).

Bevorzugt als Folien sind Metallfolien oder Folien, die mindestens eine Metallschicht umfassen, wobei in letzterem Fall eine dreischichtige Kunststoff/Aluminium/Kunststoff-Verbundfolie besonders bevorzugt ist.

Die erfindungsgemäss verwendbaren Folien sind aus dem Stand der Technik der Blisterherstellung bekannt. Sie können in dem erfindungsgemässen Verfahren analog eingesetzt werden.

Die Lehre, dass die Folie "ohne Heizen" verformt wird, soll bedeuten, dass dabei keine Mittel verwendet werden, deren einzige oder hauptsächliche Funktion das Erzeugen von Wärme ist, so zum Beispiel Infrarotlampen zum Bestrahlen der Folie oder die Induktionsheizung zum Beheizen der Werkzeuge. Wärme, die implizit auf die Folie einwirkt, z.B. Wärme, die durch die adiabatische, vorgängige Kompression des Druckgases im Druckgas vorhanden ist und so mit der Folie in Berührung kommt, gilt nicht als Heizen im Sinne der obigen Definition. Nicht als Heizen im obigen Sinn gilt auch beispielsweise die Wärme, die beim Hineindrücken von Schritt b) und/oder beim Beaufschlagen mit Druckgas von Schritt c) z.B. an den Knick- oder Biegestellen der Folie durch deren Walken entsteht. Diese implizite Wärmezufuhr soll daher nicht aus dem Schutzumfang der Anmeldung ausgeschlossen sein. Es wird aber betont, dass eine solche implizite Wärmeeinwirkung auf die Folie für das Gelingen des erfindungsgemässen Verfahrens nicht wesentlich ist. Vorzugsweise wird auch auf die implizite Zufuhr von Wärme möglichst verzichtet, so dass es sich um eine echte Kaltverformung handelt.

Als "Gesamttiefe" des Formhohlraums 221 im Schritt b) gilt die maximale Distanz, die in Vorschubrichtung des Stempels auftreten kann zwischen dem Durchstosspunkt der entsprechenden Vorschubrichtungsgeraden durch die Fläche der Matrize 22, auf die die Folie 1 zu liegen kommt, einerseits und dem Schnittpunkt dieser Vorschubrichtungsgeraden durch die Wandung des Formhohlraums 221 andererseits.

Als "Druckgas" gilt im Rahmen der vorliegenden Erfindung jedes Gas, das beim Komprimieren und einem anschliessenden fakultativen Temperieren zum Abführen von adiabatischer Kompressionswärme, d.h. bei den für den Schritt c) erforderlichen Drücken und Temperaturen, gasförmig bleibt. Beispiele für das Gas sind Luft, Stickstoff, Argon oder Helium.

Das erfindungsgemässe Verfahren kann auf vorbekannten Vorrichtungen zur Kunststoffverpackungsherstellung mittels Streck- bzw. Tiefziehen mit Druckgas, insbesondere auf solchen Vorrichtungen zur Blisterherstellung, durchgeführt werden.

Es können mit dem erfindungsgemässen Verfahren alle Verpackungsformen erzeugt werden, die auch mit den vorbekannten Verfahren erzeugt werden können, so neben den Blistern beispielsweise auch metallbeschichtete Becher.

Die Form der Formhohlräume und Stempel, die die Form der Verpackung, insbesondere also die Hofform erzeugen, ist nicht kritisch. Vorzugsweise bleibt zwischen Stempel und Formhohlraum etwas Spiel, d.h. der Stempel liegt beim Einfahren in den Formhohlraum nicht bündig an dessen Seitenwänden an. Im Interesse einer rationellen Prozessführung werden in einer Vorrichtung, auf der das erfindungsgemässe Verfahren durchgeführt wird, vorzugsweise mehrere Stempel und Formhohlräume vorgesehen, so dass mit jedem Prozessdurchgang mehrere Verpackungen oder Höfe gleichzeitig gebildet werden.

Die Orientierung der Folie bei mehrlägigen Folien, d.h ob die Metallschicht dem Unterwerkzeug eher zu- oder eher abgewandt ist, ist nicht kritisch.

Die Anfangstemperatur der Folie, bei der Schritt b) und c) des erfindungsgemässen Verfahrens durchgeführt werden, kann typischerweise im Bereich von 10 bis 30°C liegen; vorzugsweise liegt sie in etwa bei Raumtemperatur.

Die prozentuale Tiefe, bis zu der die Folie in Schritt b) in den Formhohlraum hineingedrückt wird, d.h. die Vorschubtiefe des Stempels in Prozenten der oben definierten Gesamttiefe des Formhohlraumes, liegt erfindungsgemäss bei maximal 95%, bevorzugt im Bereich von 25 bis 75%. Die Tiefe wird in Abhängigkeit der Reibung zwischen der Folie und dem Stempel so eingestellt, dass nach Schritt c) die Dicke der Folie im Hofboden und in der Hofwand möglichst gleichmässig ist. Dabei wird die Folie in Schritt b) in der Seitenwand des entstehenden Hofes stärker beansprucht als in der Bodenwandung, in Schritt c) wird die Folie in der Bodenwandung stärker beansprucht als in der Seitenwandung.

Um in Schritt c) ein möglichst grosses Verhältnis Hoftiefe/Blisterfläche zu erzielen, muss in Schritt b) die Vorschubtiefe des Stempels in Prozenten der oben definierten Gesamttiefe des Formhohlraumes optimal gewählt werden. Die optimale Vorschubtiefe hängt ausser von der Geometrie des Stempels und des Formhohlraumes auch von der Reibung zwischen dem Stempel und der Folie ab. Bei grösserer Reibung zwischen Stempel und Folie ist eine kleinere Vorschubtiefe optimal als bei kleinerer Reibung zwischen Stempel und Folie. Vorzugsweise wird für den Stempel ein Material gewählt, das grössere Reibkräfte erzielt als Teflon, z.B. Stahl mit einer Oberflächenrauhigkeit von Rₐ 0,8 (N6).

Die Beaufschlagung des Druckgases an die konkave Form der entstehenden Folienausbuchtung in Schritt c) ist nicht kritisch und kann konstruktiv analog zu den vorbekannten Vorrichtungen zur Verpackungsherstellung mittels Streck- bzw. Tiefziehen mit Druckgas erfolgen. Vorzugsweise geschieht die Zufuhr des Druckgases mittels Bohrungen, die in den oder die Stempel eingeführt wurden.

Der Druck des Druckgases, das in Schritt c) eingesetzt wird, beträgt mehr als 20 bar und sollte in der Regel der mechanischen Festigkeit oder Zugfestigkeit der Folie angepasst sein.

Die Prozesszeit für einen Herstellungsdurchgang, d.h. die gesamte Zeit für die Hintereinanderausführung der Verfahrensschritte a) bis c), ist nicht kritisch. Sie kann sich in der Regel im Bereich von 0,5 bis 10 Sekunden, vorzugsweise 1 bis 5 Sekunden bewegen, was aber im Einzelfall von der Grösse der zu bildenden Verpackung, der Beschaffenheit der Folie u.ä. abhängen kann.

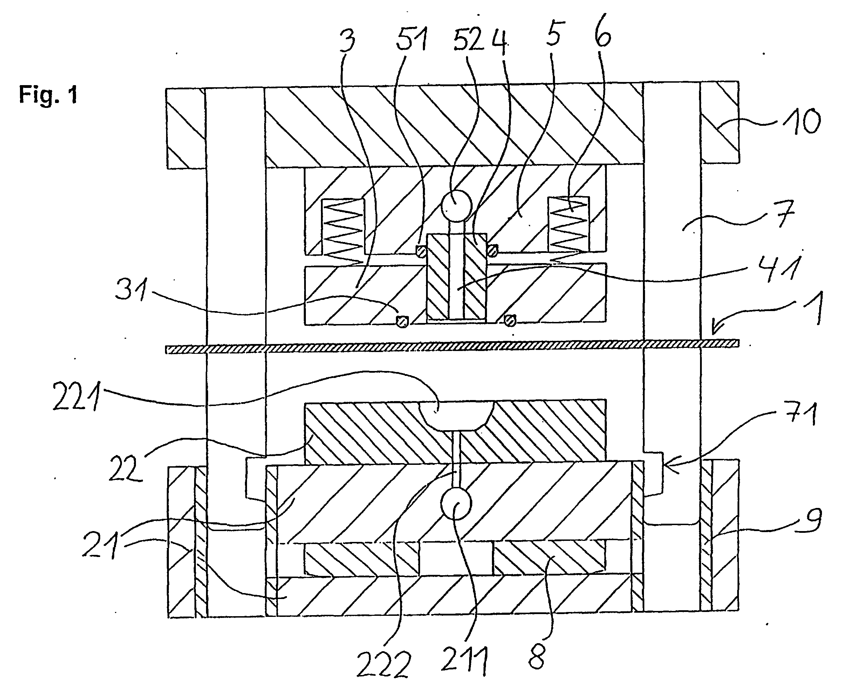

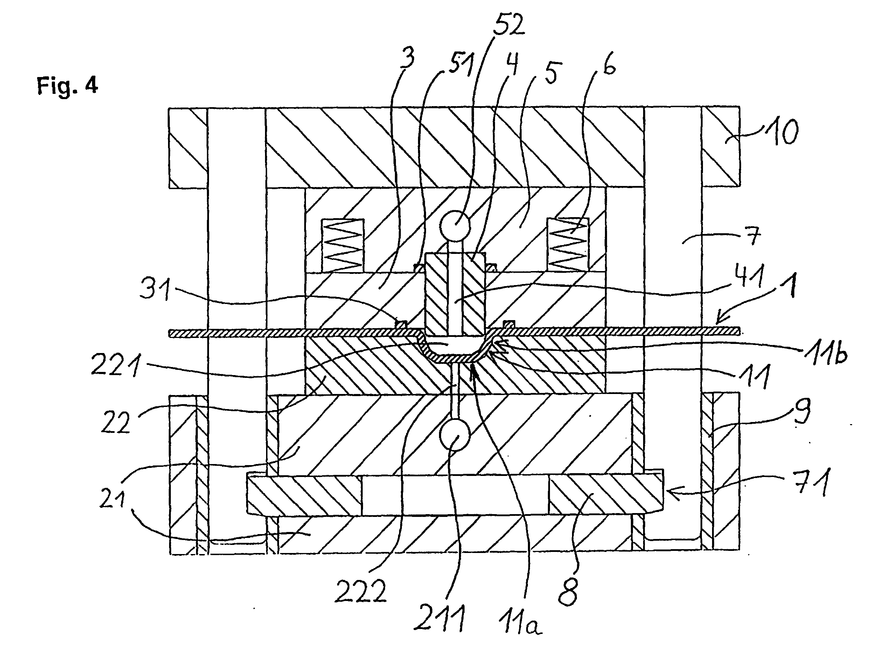

Für erfindungsgemäss einsetzbare Vorrichtungen wird beispielhaft auf Figur 1 verwiesen, wo eine solche Vorrichtung mit bereits eingelegter Folie 1 gezeigt wird. Sie weisen in der Regel zunächst ein Unterwerkzeug 2 auf, das aus einer Unterwerkzeugsplatte 21 besteht, auf die eine auswechselbar befestigte Matrize 22 aufgebracht ist, in die einer oder mehrere Formhohlräume 221 eingearbeitet sind. Das Unterwerkzeug 2 kann auch mehrere Matrizen 22 mit je einem Formhohlraum 221 oder je mehreren Formhohlräumen 221 aufweisen. Die Vorrichtung weist vorzugsweise einen Niederhalter 3 für die Folie 1 auf. Für jeden der Formhohlräume 221 in der Matrize 22 wird ein zugehöriger Stempel 4 vorgesehen, die alle vorzugsweise in einer Stempelhalteplatte 5 auswechselbar eingefasst sind. Der Niederhalter 3 und die Stempelhalteplatte 5 sind gegeneinander beweglich, vorzugsweise unter Federung mittels der Federn 6, und das Unterwerkzeug 2 ist gegenüber Niederhalter 3 und Stempelhalteplatte 5 beweglich. Die Bewegung des Unterwerkzeugs 2 gegenüber Niederhalter 3 und Stempelhalteplatte 5 wird durch einen Antrieb bewirkt (in der Figur nicht gezeigt), der elektrisch (z.B. als Exzenterantrieb), pneumatisch oder hydraulisch sein kann. Die Führung des Unterwerkzeugs 2 gegenüber der Stempelhalteplatte 5, so dass jeder Stempel 4 passgenau in einen entsprechenden Formhohlraum 221 vorgeschoben werden kann, wird vorzugsweise so bewirkt, dass eine Oberwerkzeugplatte 10 vorgesehen wird, die unbeweglich mit der Stempelhalteplatte 5 verbunden ist und eine oder mehrere parallele Führungssäulen 7 aufweist, wobei die Führungssäulen 7 beim Vorschub des Unterwerkzeugs 2 auf die Stempelhalteplatte 5 zu in Führungsbuchsen 9 einfahren, die in der Unterwerkzeugsplatte 21 ausgebildet sind. Die Achsen der Führungssäulen 7 definieren dann auch die Vorschubrichtung der Stempel 4. Die Vorschubrichtung der Stempel 4 ist vorzugsweise, aber nicht zwingend senkrecht zur Folie 1. Das Beaufschlagen mit Druckgas für den Verfahrensschritt c) kann vorzugsweise bewirkt werden, indem die Stempel 4 Druckgaszufuhrkanäle 41 aufweisen, durch die das Druckgas an die konkave Seite der sich bildenden Höfe 11 (Fig. 4) zugeführt wird. Der Druckgaszufuhrkanal 41 ist über eine Zuleitung 52, die in der Stempelhalteplatte 5 ausgebildet ist, mit einer Druckgasquelle verbunden (in der Figur nicht gezeigt). Sind mehrere Stempel 4 vorhanden, von denen jeder einen Druckgaszufuhrkanal 41 aufweist, werden vorzugsweise alle diese Druckgaszufuhrkanäle 41 an die Zuleitung 52 angeschlossen. Vorzugsweise sind an den Unterseiten von Niederhalter 3 bzw. Stempelhalteplatte 5 eine Niederhalterdichtung 31 bzw. eine Stempelhalteplattendichtung 51 angebracht, die beispielsweise die Form von O-Ringen haben und die für die Gasdichtigkeit der Vorrichtung im Verfahrensschritt c) sorgen. Ist eine Niederhalterdichtung 31 vorhanden, so sorgt sie, wenn der Niederhalter 3 auf der Folie 1 aufliegt, dafür, dass die Folie 1 an dieser Stelle stärker festgehalten wird als in der restlichen Auflagefläche Folie 1 / Niederhalter 3, in der eine gewisse Beweglichkeit der Folie 1 gegenüber der Matrize 22 und dem Niederhalter 3 besteht. Das erleichtert das Hineindrücken der Folie 1 in den Schritten b) und c). Die eine Niederhalterdichtung 31 umgibt dabei vorzugsweise sämtliche Formhohlräume 221 oder es ist alternativ für jeden Formhohlraum eine separate Niederhalterdichtung vorgesehen. Die Matrize 22 weist in jedem Formhohlraum 221 vorzugsweise eine oder mehrere Entlüftungsbohrungen 222 auf, die vor allem am Schluss von Schritt c) des Verfahrens die auf der konvexen Seite der entstehenden Höfe zu verdrängende Luft aus den Formhohlräumen 221 abführen. Sind mehrere Formhohlräume 221 mit mehreren Entlüftungsbohrungen 222 vorhanden, können letztere mittels eines Auslasses 211 verbunden werden.

Besonders bevorzugt weist eine für das erfindungsgemässe Verfahren geeignete Vorrichtung auch einen Verriegelungsmechanismus auf, der im Verfahrensschritt c) dem Druck des Gases entgegenwirkt und bei der Abdichtung der Vorrichtung hilft. Eine solche Vorrichtung ist ebenfalls Gegenstand der vorliegenden Erfindung. Der Verriegelungsmechanismus besteht aus mindestens einem Verriegelungskeil 8, der in der Unterwerkzeugsplatte 21 vorgesehen ist, und aus mindestens einer zugehörigen Aussparung 71, die in eine der Führungssäulen 7 eingearbeitet ist. Die Position der Aussparung 71 auf der Führungssäule 7 wird so gewählt, dass die Aussparung 71 genau dann vor den Verriegelungskeil 8 zu liegen kommt, wenn das Unterwerkzeug 2 soweit gegen die Oberwerkzeugplatte 10 hin vorgeschoben wird, dass das Ensemble Stempelhalteplatte 5 / Stempelhalteplattendichtung 51 / Niederhalter 3 / Niederhalterdichtung 31 / Folie 1 / Matrize 22 fugenlos aufeinanderliegt. In dieser Stellung wird der Verriegelungskeil 8 in die Aussparung 71 z.B. pneumatisch oder hydraulisch eingeschoben, so dass die Führungssäule 7 in Vorschubrichtung arretiert und die Vorrichtung als Ganzes verriegelt ist.

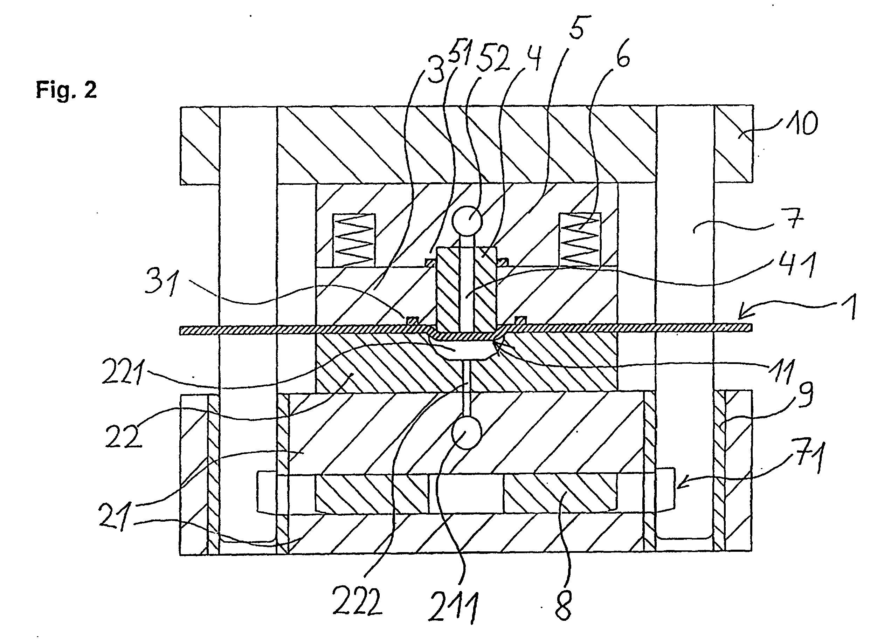

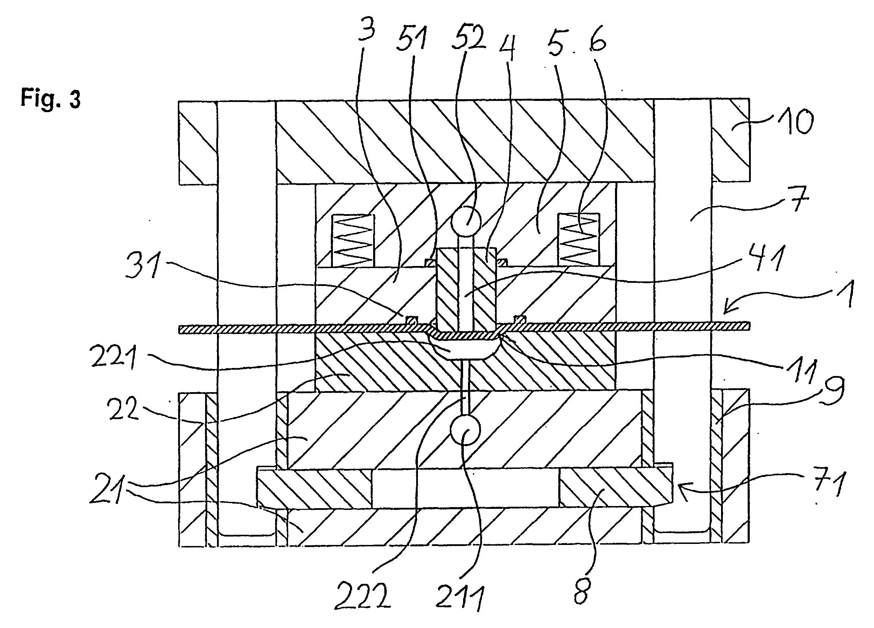

Im Folgenden werden die einzelnen Verfahrensschritte unter Verwendung der obigen besonders bevorzugten Vorrichtung mit Verriegelungsmechanismus beschrieben, wobei auf die Figuren 2 bis 4 Bezug genommen wird.

Für Verfahrensschritt a) wird das Unterwerkzeug 2 von der Stempelhalteplatte 5 mit den Stempeln 4 weggefahren. Es wird eine Folie 1 zwischen die Matrize 22 und den Niederhalter 3 gebracht, so dass sich über allen vorhandenen Formhohlräumen 221 Folie 1 befindet. Die Folie 1 kann dabei ein einzelnes Blatt oder eine abgewickelte Portion von einer Endlosbahn sein. Durch Verschieben des Unterwerkzeugs 2 gegen die Oberwerkzeugplatte 10 wird die Folie 1 zwischen der Matrize 22 und dem Niederhalter 3 festgeklemmt. Besonders bevorzugt weist der Niederhalter 3 eine Niederhalterdichtung 31 auf. Die Niederhalterdichtung 31 sorgt dann dafür, dass die Folie 1 unter der Niederhalterdichtung 31 stärker festgehalten wird als unter dem Rest des Niederhalters 3.

Für Verfahrensschritt b) wird die Matrize 22 mit der Folie 1 soweit an die Oberwerkzeugplatte 10 mit der Stempelhalteplatte 5 und den Stempeln 4 vorgeschoben, dass die Stempel 4 bis auf den gewünschten prozentualen Anteil der Gesamttiefe der Formhohlräume 221, wie oben definiert, in die Folie 1 hineingedrückt werden. Die Stempelhalterplattendichtung 51 kommt dabei auf den Niederhalter 3 zu liegen. In diesem Stadium schliesst das Ensemble Stempelhalteplatte 5 / Stempelhalteplattendichtung 51 / Niederhalter 3 / Niederhalterdichtung 31 / Folie 1 fugenlos. Vorzugsweise wird jetzt der oben beschriebene Verriegelungsmechanismus Aussparung 71 / Verriegelungskeil 8 aktiviert.

Für Schritt c) wird durch die in den Stempeln 4 vorhandenen Druckgaszufuhrkanäle 41 Druckgas an die konkave Seite der entstehenden Höfe 11 beaufschlagt, wodurch diese die endgültige von den Formhohlräumen 221 vorgegebene Form, unter Bildung von Bodenwand 11a und Seitenwand 11b, annehmen. Die auf der konvexen Seite der entstehenden Höfe 11 vorhandene Luft wird mittels der Entlüftungsbohrungen 222 abgeführt.

Die Folienlage oder abgewickelte Portion der Folie mit den fertig ausgeformten Höfen kann der Vorrichtung entnommen werden und beispielsweise einer Abfüllanlage für die zu verpackenden Produkte zugeführt werden.

Das erfindungsgemässe Verfahren zeichnet sich durch grosse Verhältnisse Gesamttiefe der Formhohlräume / Fläche der Blister, durch eine möglichst gleichmässige Dicke der Folie in der Boden- und Seitenwand der Höfe und durch eine grosse Stabilität der umgeformten Folie aus.

Die Erfindung wird nun durch das folgende Beispiel veranschaulicht. Dieses dient nur zur Illustration, nicht jedoch zur Auslegung des Schutzumfangs der vorliegenden Erfindung.

### Beispiel

Es wurde eine Vorrichtung ähnlich der in Figur 1 gezeigten verwendet. Die Vorrichtung wies eine Stempelhalteplatte 5 mit 2 Reihen zu je 5 Stempeln 4 auf , von denen jeder langlochförmige Abmessungen von 27,9 x 15,6 mm (Länge x Breite), bei einem Rundungsradius an den Ecken von 1,2 mm, aufwies. Die Grundfläche der Stempel 4 war eben. Die Stempel wurden aus Stahl gefertigt mit einer Oberflächenrauhigkeit von Rₐ 0,8 (N6). Die Matrize 22 wies entsprechend 2 Reihen zu je 5 Formhohlräumen 221 auf. Der Abstand zwischen den Aussenkanten zweier Formhohlräume 221 betrug jeweils 4 mm. Der Rand jedes Formhohlraums 221 war als Langloch von 30,7 x 18,4 mm (Länge x Breite) ausgebildet. Die Kante am Rand der Formhohlräume 221 war abgerundet mit einem Krümmungsradius von 0,5 mm, wobei die Krümmung soweit geführt war, bis ein Winkel von 57 Grad zur Oberfläche der Matrize 22 erreicht war. Der weitere Tiefgang der Formhohlräume 221 war als eine Serie von konzentrischen, aneinander anschliessenden Kegelstümpfen mit langlochförmiger (anstatt kreisförmiger) Grundfläche ausgebildet, wobei die Stirnfläche jedes Kegelstumpfes die Grundfläche des nächsten, kleineren Kegelstumpfes bildete. Die Parameter der einzelnen Kegelstümpfe waren wie folgt:

| Kegelstumpf Nr. | Breitseite Grundfläche (mm) | Neigungswinkel d. Mantelfläche (Grad) |
|---|---|---|
| 1 | 15,6 | 57 |
| 2 | 13,8 | 42 |
| 3 | 9,2 | 26 |
| 4 | 3,2 | 16 |

Die Breite der Stirnfläche des 4. Kegelstumpfes betrug noch 1 mm. Die Bewegungsrichtung der Stempel 4 war senkrecht zu der Oberfläche der Matrize 22 und konzentrisch zum entsprechenden Formhohlraum 221. Da die Vorschubrichtung der Stempel 4 genau senkrecht zur Folie 1 war, ergab sich die Tiefe der Formhohlräume 221 nach der eingangs erwähnten Definition gerade als die vertikal gemessene Tiefe der Stirnfläche des 4. Kegelstumpfes, also zu 7,3 mm.

Es wurde eine dreilagige Folie (60 µm PVC, 45 µm Aluminiumschicht, 25 µm OPA) eingesetzt, die bereits, im Hinblick auf die spätere Verschliessung der Blister, einseitig mit Heisssiegellack beschichtet war. Die Temperatur der Folie betrug ca. 20°C.

Eine genügend grosse Portion der Folie, um alle 10 Formhohlräume 221 zu bedecken, wurde von einer Rolle abgewickelt, zwischen die Matrize 22 und den Niederhalter 3 gebracht und das Unterwerkzeug 2 gegen den Niederhalter 3, die Stempelhalteplatte 5 und die Oberwerkzeugplatte 10 hochgefahren, bis der Niederhalter 3, der eine Niederhalterdichtung 31 aufwies, begann, die Folie 1 auf die Matrize 22 zu pressen. Das Unterwerkzeug 2 wurde weiter hochgefahren, bis die Stirnflächen der Stempel 4 2,8 mm in die Formhohlräume 221 eintauchten, was ca. 38% der Gesamttiefe der Formhohlräume 221 entsprach. Die Stempelhalteplatte 5 wies eine Stempelhalteplattendichtung 51 auf, die sich in diesem Stadium auf den Niederhalter 3 legte und so die Fuge zwischen Niederhalter 3 und Stempelhalteplatte 5 abdichtete.

In diesem Stadium wurden vier Verriegelungskeile 8 in entsprechende Aussparungen 71 in den vier Führungssäulen 7 eingeschoben, die in dieser Position gerade vor den Verriegelungskeilen 8 lagen, und auf diese Weise wurde die Vorrichtung gasdicht verriegelt. Nun wurde mittels Druckgaszufuhrkanälen 41, die in den Stempeln 4 ausgebildet waren, Druckgas (im Prototypenstadium Stickstoff, in der Produktionsphase Druckluft) mit einem Druck von 35 bar an die konkave Seite der entstandenen Höfe 11 beaufschlagt. Die an der konvexen Seite der Vertiefungen vorhandene Restluft wurde durch je 2 Entlüftungsbohrungen 222 (pro Formhohlraum) abgeführt.

Nach ca. 1 s wurde der Gasdruck entspannt und die Verriegelung durch zurückschieben der Verriegelungskeile 8 wieder gelöst. Beim Entspannen zogen sich die in der Folie gebildeten Höfe wieder leicht zusammen, so dass deren Tiefe nicht 7,3 mm sondern nur etwa 6,9 mm betrug. Das Unterwerkzeug 2 wurde wieder heruntergefahren, so dass der Niederhalter 3 die Folie 1 freigab. Es wurde eine Portion Folie, auf der 10 Blister ausgeformt waren, erhalten.

## Patentansprüche

1. Verfahren zur Kaltumformung einer Folie (1) zur Herstellung einer Verpackung, umfassend die Schritte
a) Positionieren der Folie (1) über einer mindestens einen Formhohlraum (221) aufweisenden Matrize (22),
b) Hineindrücken eines Teils der Folie (1) in den Formhohlraum (221) bis in eine Tiefe von maximal 95% der Gesamttiefe des Formhohlraumes (221) mittels eines Stempels (4), wodurch ein Hof (11) in der Folie (1) erzeugt wird,
c) Beaufschlagen des Hofes (11) von seiner konkaven Seite her mit Druckgas, so dass die Folie (1) an die Wand des Formhohlraumes (221) gedrückt wird,
wobei die Schritte b) und c) ohne Heizen durchgeführt werden, **dadurch gekennzeichnet, dass** in Schritt c) die Folie (1) mit Druckgas mit einem Druck von mehr als 20 bar beaufschlagt wird.

2. Verfahren nach Anspruch 1, **dadurch gekennzeichnet, dass** die Folie (1) während der Schritte b) und c) auf der Matrize (22) festgehalten wird.

3. Verfahren nach Anspruch 2, **dadurch gekennzeichnet, dass** die Folie (1) mittels eines Niederhalters (3), der eine Niederhalterdichtung (31) aufweist, auf der Matrize (22) festgehalten wird, dergestalt, dass die Folie (1) unter der Niederhalterdichtung (31) stärker festgehalten wird als unter dem Rest des Miederhalters (3).

4. Verfahren nach einem der Ansprüche 1 bis 3 **dadurch gekennzeichnet, dass** die Reibung zwischen der Folie (1) und dem Stempel (4) und die Eindrücktiefe in Schritt b) so eingestellt werden, dass nach Schritt c) die Dicke der Folie (1) in der Bodenwand (11a) und Seitenwand (11b) des Hofes (11) möglichst gleichmässig erzielt wird.

5. Verfahren nach einem der Ansprüche 1 bis 4 **dadurch gekennzeichnet, dass** als Folie (1) eine eine Metallschicht umfassende Folie eingesetzt wird.

6. Verfahren nach einem der Ansprüche 1 bis 4, **dadurch gekennzeichnet, dass** als Folie (1) eine Metallfolie eingesetzt wird.

7. Verfahren nach einem der Ansprüche 1 bis 6, **dadurch gekennzeichnet, dass** in Schritt b) das Hineindrücken eines Teils der Folie (1) in den Formhohlraum (221) bis in eine Tiefe von 25 bis 75% der Gesamttiefe dieses Formhohlraumes (221) erfolgt.

8. Verfahren nach einem der Ansprüche 1 bis 7, **dadurch gekennzeichnet, dass** die Folie (1) mit einer Anfangstemperatur zwischen 10 und 30°C über dem Formhohlraum (221) positioniert wird und während der Umformung beim Durchlaufen der Schritte b) und c) im Falle einer Kunststoff/Metall-Verbundfolie und im Falle einer Kunststofffolie aus einer oder mehreren Kunststoffschichten unterhalb der Glastemperatur dieser Kunststoffschichten und, falls die Folie (1) eine Metallfolie ist, unterhalb der Rekristallisationstemperatur gehalten wird.

9. Vorrichtung zur Durchführung des Verfahrens nach Anspruch 1, umfassend ein Unterwerkzeug (2) mit einer Unterwerkzeugsplatte (21) und einer Matrize (22), die wiederum mindestens einen Formhohlraum (221) aufweist; eine Stempelhalteplatte (5) mit mindestens einem Stempel (4), dergestalt, dass Matrize (22) und Stempelhalteplatte (5) gegeneinander verschiebbar sind und der oder die Stempel (4) dabei in den oder die Formhohlräume (221) eintauchen; Mittel zur Zufuhr von Druckgas, dergestalt, dass bei in den Formhohlraum (221) eingetauchtem Stempel (4) der Formhohlraum (221) mit Druckgas beaufschlagbar ist; Mittel zur Arretierung von Matrize (22) und Stempelhalteplatte (5) in einer bestimmten relativen Position zueinander; sowie einen Niederhalter (3) zwischen Stempelhalteplatte (5) und Matrize (22), **dadurch gekennzeichnet, dass** der Niederhalter (3) mit mindestens einer Niederhalterdichtung (31) in Form eines O-Rings versehen ist.

10. Vorrichtung nach Anspruch 9, **dadurch gekennzeichnet, dass** die Stempelhalteplatte (5) eine Stempelhalteplattendichtung (51) aufweist, die zum Aufliegen auf den Niederhalter (3) befähigt ist.

11. Vorrichtung nach Anspruch 10, **dadurch gekennzeichnet, dass** Stempelhalteplatte (5), Stempelhalteplattendichtung (51), Niederhalter (3), Niederhalterdichtung (31), Folie (1) und Matrize (22) bei der besagten Verschiebung von Matrize (22) und Stempelhalteplatte (5) aufeinander zu zu einem fugenlosen Verbund verschliessbar sind.

12. Vorrichtung nach Anspruch 11, **dadurch gekennzeichnet, dass**
a) die Stempelhalteplatte (5) mit einer Oberwerkzeugplatte (10) verbunden ist, an die eine Führungssäule (7) mit einer Aussparung (71) in einem bestimmten Abstand von der Oberwerkzeugplatte (10) angebracht ist, wobei die Führungssäule (7) während der Verschiebung von Matrize (22) und Stempelhalteplatte (5) aufeinander zu in eine Führungsbuchse (9), die in der Unterwerkzeugsplatte (21) ausgebildet ist, eindringt und dabei die Aussparung (71) ebenfalls in die Führungsbuchse (9) hineinschiebt, und in der Unterwerkzeugsplatte (21) ein in die Führungsbuchse (9) hinein beweglicher Verriegelungskeil (8) vorhanden ist; und
b) der Verriegelungskeil (8) und die Aussparung (71) die Mittel zur Arretierung bilden, indem der Verriegelungskeil (8) in die Aussparung (71) hineinschiebbar ist, wenn die Aussparung (71) im Inneren der Führungsbuchse (9) ist.

13. Vorrichtung nach Anspruch 12, **dadurch gekennzeichnet, dass** die Aussparung (71) so auf der Führungssäule (7) angeordnet ist, dass die Arretierung dann möglich ist, wenn Stempelhalteplatte (5), Stempelhalteplattendichtung (51), Niederhalter (3), Niederhalterdichtung (31), Folie (1) und Matrize (22) den fugenlosen Verbund bilden.

## Claims

1. Process for cold-forming a film (1) for producing packaging, comprising the steps of
a) positioning the film (1) over a die (22) having at least one moulding cavity (221),
b) pressing part of the film (1) into the moulding cavity (221) to a depth of at most 95% of the total depth of the moulding cavity (221) by means of a punch (4), thereby producing a well (11) in the film (1),
c) acting on the well (11) from its concave side with pressurised gas so that the film (1) is pressed against the wall of the moulding cavity (221),
the steps b) and c) being carried out without heating, **characterised in that** in step c) the film (1) is acted upon by pressurised gas at a pressure of more than 20 bar.

2. Process according to claim 1, **characterised in that** the film (1) is secured on the die (22) during steps b) and c).

3. Process according to claim 2, **characterised in that** the film (1) is secured on the die (22) by means of a hold-down device (3) which comprises a hold-down seal (31), so that the film (1) is secured more firmly under the hold-down seal (31) than under the remainder of the hold-down device (3).

4. Process according to one of claims 1 to 3, **characterised in that** the friction between the film (1) and the punch (4) and the depth of penetration in step b) are adjusted so that after step c) the thickness of the film (1) obtained in the base wall (11a) and side wall (11b) of the well (11) is as uniform as possible.

5. Process according to one of claims 1 to 4, **characterised in that** a film comprising a metal coating is used as the film (1).

6. Process according to one of claims 1 to 4, **characterised in that** a metal foil is used as the film (1).

7. Process according to one of claims 1 to 6, **characterised in that** in step b) the penetration of part of the film (1) into the moulding cavity (221) extends to a depth of 25 to 75% of the total depth of this moulding cavity (221).

8. Process according to one of claims 1 to 7, **characterised in that** the film (1) is positioned over the moulding cavity (221) at an initial temperature of between 10 and 30°C, and during the shaping process through steps b) and c), in the case of a composite plastics/metal film and in the case of a plastics film consisting of one or more layers of plastics, is kept below the glass transition temperature of these layers of plastics and, if the film (1) is a metal film, is kept below the recrystallisation temperature.

9. Apparatus for carrying out the process according to claim 1, comprising a lower tool (2) having a lower tool plate (21) and a die (22) which in turn has at least one moulding cavity (221); a punch holding plate (5) with at least one punch (4), so that the die (22) and punch least one punch (4), so that the die (22) and punch holding plate (5) are movable towards one another and the punch or punches (4) penetrate into the moulding cavity or cavities (221); means for supplying pressurised gas, such that when the punch (4) has entered the moulding cavity (221) the moulding cavity (221) can be acted upon with pressurised gas; means for locking the die (22) and punch holding plate (5) in a specific relative position to one another; and a hold-down device (3) between the punch holding plate (5) and die (22), **characterised in that** the hold-down device (3) is provided with at least one hold-down seal (31) in the form of an O-ring.

10. Apparatus according to claim 9, **characterised in that** the punch holding plate (5) comprises a punch holding plate seal (51) which is capable of resting on the hold-down device (3).

11. Apparatus according to claim 10, **characterised in that** when the die (22) and punch holding plate (5) are moved together as mentioned, the punch holding plate (5), punch holding plate seal (51), hold-down device (3), hold-down seal (31), film (1) and die (22) can be closed to form a seamless joint.

12. Apparatus according to claim 11, **characterised in that**
a) the punch holding plate (5) is connected to an upper tool plate (10) on which is mounted a guide column (7) with a recess (71) at a specific distance from the upper tool plate (10), the guide column (7) penetrating during the movement of the die (22) and punch holding plate (5) towards each other into a guide bushing (9) which is formed in the lower tool plate (21) and thereby pushing the recess (71) into the guide bushing (9) as well, while in the lower tool plate (21) is a locking wedge (8) which is movable into the guide bushing (9); and
b) the locking wedge (8) and the recess (71) form the locking means, **in that** the locking wedge (8) is able to be inserted in the recess (71) when the recess (71) is inside the guide bushing (9).

13. Apparatus according to claim 12, **characterised in that** the recess (71) is disposed on the guide column (7) in such a way that locking is possible when the punch holding plate (5), punch holding plate seal (51), hold-down device (3), hold-down seal (31), film (1) and die (22) form the seamless joint.

## Revendications

1. Procédé pour la déformation à froid d'une feuille (1) pour la production d'un emballage, comprenant les phases :
a) positionnement de la feuille (1) au-dessus d'une matrice (22) présentant au moins une cavité de moulage (221),
b) enfoncement d'une partie de la feuille (1) dans la cavité de moulage (221) jusqu'à une profondeur de 95% au maximum de la profondeur totale de la cavité de moulage (221), au moyen d'un poinçon (4), de sorte qu'une bouche (11) est formée dans la feuille (1),
c) charge de la bouche (11), par son côté concave, avec du gaz sous pression de manière que la feuille (1) soit pressée contre la paroi de la cavité de moulage (221),
dans lequel les phases (b) et (c) sont exécutées sans chauffage, **caractérisé en ce que**, dans la phase c), la feuille (1) est chargée avec un gaz sous pression possédant une pression de plus de 20 bars.

2. Procédé selon la revendication 1, **caractérisé en ce que** la feuille (1) est maintenue immobilisée sur la matrice (22) pendant les phases b) et c).

3. Procédé selon la revendication 2, **caractérisé en ce que** la feuille (1) est maintenue immobilisée sur la matrice (22) au moyen d'un serre-flan (3) qui présente une garniture d'étanchéité de serre-flan (31), de telle manière que la feuille (1) soit maintenue immobilisée plus fortement sous la garniture d'étanchéité de serre-flan (31) que sous le reste du serre-flan (3).

4. Procédé selon une des revendications 1 à 3, **caractérisé en ce que** le frottement entre la feuille (1) et le poinçon (4) et la profondeur d'enfoncement de la phase b) sont établis de telle manière qu'après la phase c), l'épaisseur de la feuille (1) soit obtenue aussi uniforme que possible dans la paroi de fond (11a) et dans la paroi latérale (11b) de la bouche (11).

5. Procédé selon une des revendications 1 à 4, **caractérisé en ce qu'**on utilise comme feuille (1) une feuille comprenant une couche métallique.

6. Procédé selon une des revendications 1 à 4, **caractérisé en ce qu'**on utilise comme feuille (1) une feuille métallique.

7. Procédé selon une des revendications 1 à 6, **caractérisé en ce que**, dans la phase b), l'enfoncement d'une partie de la feuille (1) dans la cavité de moulage (221) se produit jusqu'à une profondeur de 25 à 75 % de la profondeur totale de cette cavité de moulage (221).

8. Procédé selon une des revendications 1 à 7, **caractérisé en ce que** la feuille (1) est positionnée au-dessus de la cavité de moulage (221) à une température initiale comprise entre 10 et 30 °C et que, pendant la déformation, lors du déroulement des phases b) et c), dans le cas d'une feuille composite matière plastique/métal et dans le cas d'une feuille de matière plastique faite d'une ou de plusieurs couches de matière plastique, elle est au-dessous de la température de transition vitreuse de ces couches de matière plastique et, dans le cas où la feuille (1) est une feuille de métal, au-dessous de la température de recristallisation.

9. Dispositif pour la mise en oeuvre du procédé selon la revendication 1, comprenant un outil inférieur (2) qui comporte une plaque d'outil inférieur (21) et une matrice (22) qui, à son tour, présente au moins une cavité de moulage (221) ; une plaque de support de poinçon (5) possédant au moins un poinçon (4) de telle manière que la matrice (22) et la plaque de support de poinçon (5) puissent se déplacer l'une par rapport à l'autre et que le ou les poinçons (4) plongent dans la cavité de moulage ou les cavités de moulage (221) ; des moyens pour l'amenée de gaz sous pression, de telle manière que, lorsque le poinçon (4) est enfoncé dans la cavité de moulage (221), la cavité de moulage (221) puisse être chargée avec du gaz sous pression ; des moyens pour bloquer la matrice (22) et la plaque de support de poinçon (5) dans une certaine position relative l'une par rapport à l'autre ; ainsi qu'un serre-flan (3) placé entre la plaque de support de poinçon (5) et la matrice (22), **caractérisé en ce que** le serre-flan est muni d'au moins une garniture d'étanchéité de serre-flan (31) présentant la forme d'une bague torique.

10. Dispositif selon la revendication 9, **caractérisé en ce que** la plaque de support de poinçon (5) présente une garniture d'étanchéité de plaque de support de poinçon (51) qui est apte à s'appliquer sur le serre-flan (3).

11. Dispositif selon la revendication 10, **caractérisé en ce que** la plaque de support de poinçon (5), la garniture d'étanchéité de plaque de support de poinçon (51), le serre-flan (3), la garniture d'étanchéité de serre-flan (31), la feuille (1) et la matrice (22) peuvent être serrées pour réaliser un assemblage dépourvu de jeu lors de la translation précitée de la matrice (22) et de la plaque de support de poinçon (5) l'une en direction de l'autre.

12. Dispositif selon la revendication 11, **caractérisé en ce que**
a) la plaque de support de poinçon (5) est reliée à une plaque d'outil supérieur (10) à laquelle est fixée une colonne de guidage (7) qui présente un évidement (71) à une certaine distance de la plaque d'outil supérieur (10), la colonne de guidage (7) pénétrant, lors de la translation de la matrice (22) et de la plaque de support de poinçon (5) l'une en direction de l'autre, dans une douille de guidage (9) qui est formée dans la plaque d'outil inférieure (21) et l'évidement (71) pénétrant alors aussi dans la douille de guidage (9) et un coin de verrouillage (8) qui peut se déplacer pour pénétrer dans la douille de guidage (9) étant prévu dans la plaque d'outil inférieur (21) ; et
b) le coin de verrouillage (8) et l'évidement (71) forment les moyens de blocage, en ce sens que le coin de verrouillage (8) peut être enfoncé dans l'évidement (71) lorsque l'évidement (71) se trouve à l'intérieur de la douille de guidage (9).

13. Procédé selon la revendication 12, **caractérisé en ce que** l'évidement (71) est disposé sur la colonne de guidage (7) de telle manière que le blocage soit possible lorsque la plaque de support de poinçon (5), la garniture d'étanchéité de plaque de support de poinçon (51), le serre-flan (3), la garniture d'étanchéité de serre-flan (31), la feuille (1) et la matrice (22) forment l'assemblage dépourvu de jeu.
